# EUROPÄISCHE PATENTSCHRIFT

(11) **EP 1 442 208 B1**
(45) Veröffentlichungstag und Bekanntmachung des Hinweises auf die Patenterteilung: **13.12.2006**
(21) Anmeldenummer: 02782955.5
(22) Anmeldetag: 18.10.2002
(51) Int. Cl.: F02G 5/00, F02G 5/02, F01K 23/06, F22B 1/18

(54) **VORRICHTUNG ZUR ERZEUGUNG MECHANISCHER ENERGIE**
DEVICE FOR PRODUCING MECHANICAL ENERGY
DISPOSITIF DE PRODUCTION D'ENERGIE MECANIQUE

(30) Priorität: 20.10.2001 DE 20117271 U
(43) Veröffentlichungstag der Anmeldung: 04.08.2004
(73) Patentinhaber: AMOVIS GmbH, 13355 Berlin (DE)
(72) Erfinder: CLEMENS, Herbert, 13505 Berlin (DE)
(74) Vertreter: Weisse, Renate
(86) Internationale Anmeldenummer: PCT/EP2002/011705
(87) Internationale Veröffentlichungsnummer: WO 2003/036072

(56) Entgegenhaltungen:
- DE-A- 2 116 824
- DE-A- 2 558 919
- DE-A- 3 025 052
- DE-A- 19 610 382
- DE-A- 19 921 420
- GB-A- 804 322
- BUSCHMANN G ET AL: "ZERO EMISSION ENGINE - DER DAMPFMOTOR MIT ISOTHERMER EXPANSION" MTZ MOTORTECHNISCHE ZEITSCHRIFT, FRANCKH'SCHE VERLAGSHANDLUNG,ABTEILUNG TECHNIK. STUTTGART, DE, Bd. 61, Nr. 5, Mai 2000 (2000-05), Seiten 314-320,322-323, XP000932183 ISSN: 0024-8525

## Beschreibung

### Technisches Gebiet

Die Erfindung betrifft eine Vorrichtung zur Erzeugung mechanischer Energie enthaltend eine Verbrennungs-Kraftmaschine und eine Expansions-Kraftmaschine, die mit Heißdampf von einem Dampferzeuger gespeist ist, wobei Abgase der Verbrennungs-Kraftmaschine zur Nutzung ihrer Abwärme auf den Dampferzeuger aufgeschaltet sind.

### Stand der Technik

Die DE 196 10 382 C2 beschreibt einen kombinierten Motor, der aus einer Verbrennungs-Kraftmaschine und einer Expansions-Kraftmaschine in Form eines Dampfmotors besteht. Der Dampfmotor erhält Hochdruckdampf von einem Dampferzeuger. Der Hochdruckdampf wird durch die Kühlung des Motorblocks der Verbrennungs-Kraftmaschine vorerhitzt. Der Dampferzeuger ist von den Abgasen der Verbrennungs-Kraftmaschine beaufschlagt. Die Verbrennungs-Kraftmaschine und der Dampfmotor arbeiten auf eine gemeinsame Kurbelwelle. In der über den Dampferzeuger in die Atmosphäre geführten Abgasleitung ist stromauf von dem Dampferzeuger ein Oxidationskatalysator angeordnet, um Schadstoffe aus den Abgasen herauszufiltern. Die DE 196 10 382 C2 schlägt vor, zeitweise oder ständig Brennstoff vor dem Katalysator in die Abgasleitung einzuleiten, um den Leistungsanteil des Dampfmotors zu erhöhen. Dieser zusätzliche Brennstoff wird in dem Katalysator zusammen mit unverbranntem Treibstoff aus der Kraftmaschine verbrannt.

Es erfolgt hier eine Nachverbrennung von unverbranntem Treibstoff aus der Verbrennungs-Kraftmaschine in üblicher Weise durch einen Oxidationskatalysator. Der Dampferzeuger nutzt primär die Abwärme der Abgase einschließlich der im Oxidationskatalysator freiwerdenden Verbrennungswärme. Nur um die Leistung des Dampferzeugers darüber hinaus zu erhöhen, kann zusätzlich Brennstoff in den Oxidationskatalysator eingeleitet werden.

Die Menge des Brennstoffes, der zusätzlich in dem Oxidationskatalysator verbrannt werden kann, ist durch die konstruktiven Eigenschaften des Oxidationskatalysators begrenzt. Der Oxidationskatalysator ist dafür ausgelegt, Reste von unverbranntem Treibstoff in den Abgasen oder bestimmte Schadstoffe nachzuverbrennen, nicht jedoch dafür, als Wärmequelle für einen Dampferzeuger zu dienen. Der auf die gleiche Kurbelwelle wie die Verbrennungs-Kraftmaschine arbeitende Dampfmotor soll im wesentlichen nur die Wärme der Abgase nutzen und damit den Wirkungsgrad verbessern.

Die DE 25 58 919 A betrifft die Ausnutzung der Wärme der Abgase einer Verbrennungs-Kraftmaschine mittels einer Expansions-Kraftmaschine. Die Expansions-Kraftmaschine wird dabei von Dampf gespeist, der von einem Dampferzeuger geliefert wird. Die Expansions-Kraftmaschine ist mit der Verbrennungs-Kraftmaschine über einen Freilauf gekuppelt. Der Dampferzeuger wird ausschließlich von erwärmten Auspuffgasen beheizt.
Die Auspuffgase von der Verbrennungs-Kraftmaschine enthalten noch brennbare Komponenten. Diesen wird Luft von einer Luftquelle zugemischt. Das Gemisch von Auspuffgasen und Luft wird dann in einem nicht näher dargestellten "Nachbrenner" weiter verbrannt und erhitzt. Es erfolgt ausschließlich eine Nachverbrennung von Abgasen. Die Nachverbrennung setzt voraus, daß in den Abgasen noch in nennenswerter Weise brennbare Bestandteile enthalten sind. Nur die Energie dieser Abgase steht für die Expansions-Kraftmaschine zur Verfügung.

### Offenbarung der Erfindung

Der Erfindung liegt die Aufgabe zugrunde, bei einer Vorrichtung der eingangs genannten Art die Leistung des Dampferzeugers zu verbessern.

Eine weitere Aufgabe der Erfindung besteht darin, auf einfache und wirksame Weise Schadstoffe und unverbrannten Treibstoff in den Abgasen der Verbrennungs-Kraftmaschine zu eliminieren.

Erfindungsgemäß werden diese Aufgaben dadurch gelöst, daß der Dampferzeuger von einem nicht-katalytischen Brenner mit einer Brennertemperatur zwischen 1100° bis 1300°C beheizt ist und die Abgase der Verbrennungs-Kraftmaschine in die Brenngase des Brenners einleitbar sind, wobei dem Brenner eine Mischkammer vorgeschaltet ist, in welche die heißen Abgase der Verbrennungs-kraftmaschine geleitet werden, und Mittel Treibstoff in die heißen Abgase zur Erzeugung eines Brenngases für den Brenner einspritzen.

Die Nachverbrennung unverbrannten Treibstoffs und die Verbrennung von Schadstoffen erfolgt somit bei der Erfindung nicht-katalytisch in einem Brenner. Die Brenngase in diesem Brenner haben eine solche Temperatur, daß einerseits unverbrannte Treibstoffanteile in den dort hinein eingeleiteten Abgasen der Verbrennungs-Kraftmaschine nachverbrannt werden, andererseits aber sich im wesentlichen keine Stickoxyde bei zu hohen Temperaturen bilden. Der Brenner dient zur Beheizung des Dampferzeugers und kann nach dem Leistungsbedarf des Dampferzeugers und der Expansions-Kraftmaschine ausgelegt werden. Die Wärme der Abgase der Verbrennungs-Kraftmaschine wird für die Dampferzeugung mit ausgenutzt.

Der nicht-katalytische Brenner kann ein Porenbrenner sein. Vorzugsweise sind der nicht-katalytische Brenner und die Verbrennungs-Kraftmaschine mit der gleichen Art von Treibstoff betreibbar.

Dem Brenner ist vorzugsweise eine Mischkammer vorgeschaltet, in welche die heißen Abgase der Verbrennungs-Kraftmaschine geleitet werden. Treibstoff ist in die heißen Abgase zur Erzeugung eines Brenngases für den Brenner einspritzbar. Die heißen Abgase werden ausgenutzt, um den Treibstoff zu verdampfen und in der Mischkammer ein Brenngas zu erzeugen.

Der Brenner weist vorzugsweise Luftzufuhrmittel auf. Die Luftzufuhrmittel können Verbrennungsluft in eine Abgasleitung stromauf von deren Mündung in die Mischkammer einleiten. Die Luftzufuhrmittel können ein Gebläse aufweisen. Stromauf von der Einmündung des Luftzufuhrrohres in die Abgasleitung kann ein Sensor zur Messung des Sauerstoffgehalts im Abgas angeordnet sein. Das Gebläse ist dann in Abhängigkeit von diesem Sauerstoffgehalt steuerbar.

Dem Brenner ein kann ein Schadstoffkatalysator oder ein Rußfilter oder beides nachgeschaltet sein. Der Schadstoffkatalysator und das Rußfilter sind stromauf von dem Dampferzeuger angeordnet.

Durch einen solchen nachgeschalteten Schadstoffkatalysator werden Reste von Schadstoffen verbrannt, die von dem Brenner noch nicht verbrannt worden sind oder sich in dem Brenner z.B. in Form von Stickoxiden wieder gebildet haben. Der Schadstoffkatalysator braucht dabei nur zum Verbrennen von Resten von Schadstoffen ausgelegt zu werden. Durch die heißen Abgase des Brenners, die noch nicht durch den Dampferzeuger gekühlt sind, wird der Schadstoffkatalysator schnell aufgeheizt. Auch das z.B. keramische Rußfilter wird aufgeheizt, so daß Rußpartikel darin verbrannt werden.

Ein Ausführungsbeispiel der Erfindung ist nachstehend unter Bezugnahme auf die zugehörige Zeichnung näher erläutert.

### Kurze Beschreibung der Zeichnungen

- Fig.1: ist eine schematische Seitenansicht einer Verbrennungs-Kraftmaschine mit Abgasstrang und integrierten Dampfmotor als Expansions-Kraftmaschine.
- Fig.2: ist eine detailliertere, jedoch schematische Darstellung des Dampfmotors von Fig.1.

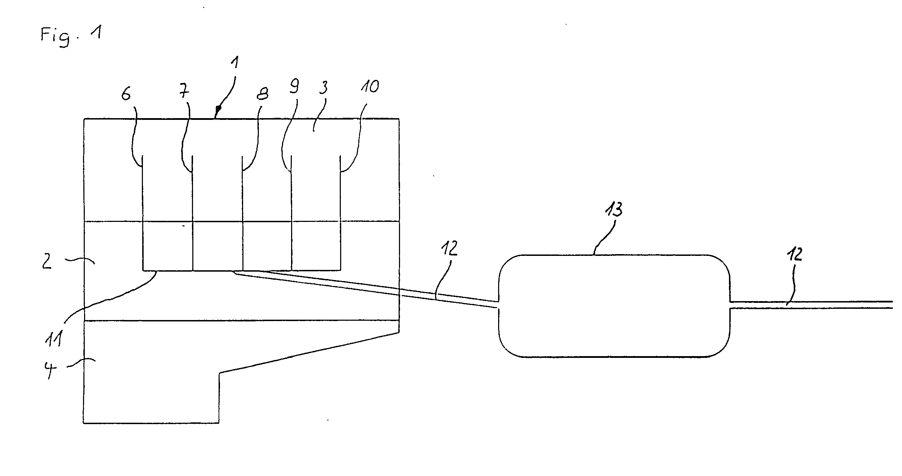

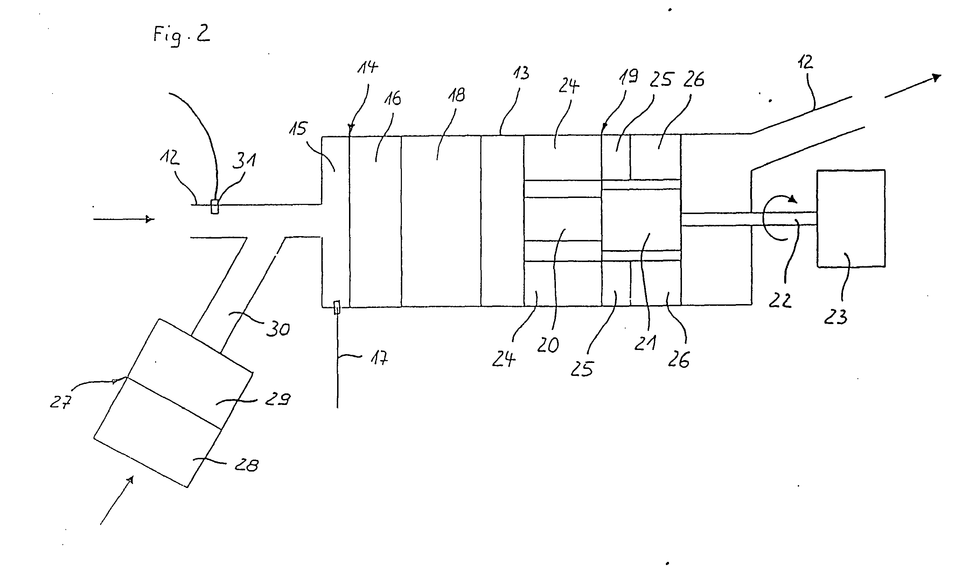

Fig.1 zeigt als Verbrennungs-Kraftmaschine einen typischen Kolbenmotor 1 mit einem Motorblock 2, einem darauf aufgesetzten Zylinderkopf 3 und einer untenseitigen Ölwanne 4. Der Kolbenmotor 1 weist fünf Zylinder auf, deren Auslaß jeweils in einem Abgaskrümmer 6 bis 10 mündet. Die Abgaskrümmer 6 bis 10 enden in einem Sammler 11, von dem ein Hauptabgasrohr 12 ausgeht. Das Hauptabgasrohr 12 weist eine Erweiterung 13 auf, in der eine Expansions-Kraftmaschine in Form eines Dampfmotors der in Fig.2 detaillierter dargestellten Art eingebaut ist.

Wie aus Fig.2 ersichtlich, mündet das Hauptabgasrohr 12 in eine Verbrennungseinrichtung 14. Die Verbrennungseinrichtung 14 ist koaxial zu dem Hauptabgasrohr 12 angeordnet. Die Verbrennungseinrichtung 14 weist eingangsseitig eine Mischkammer 15 und danach einen Brenner 16 in Form eines Porenbrenners auf. Ein Porenbrenner weist bekanntlich einen Brennerkörper aus porösem keramischen Material auf. In dem porösen Brennerkörper wird ein Brenngas-Luft-Gemisch ohne offene Flamme verbrannt, wobei eine Flammenfront innerhalb des porösen Brennerkörpers verläuft. Aus dem Brennerkörper treten heiße Abgase als Verbrennungsprodukte aus. Die beschriebene Vorrichtung kann aber auch mit anderen geeigneten Brennern arbeiten.

In die Mischkammer 15 wird über Treibstoff-Einspritzmittel 17 Treibstoff eingespritzt. Dieser Treibstoff ist von der gleichen Art wie der, mit dem auch der Kolbenmotor 1 versorgt wird. Der eingespritzte Treibstoff vermischt sich mit den heißen Abgasen des Kolbenmotors und werden dabei verdampft. In dem Brenner 16 wird das Gemisch ohne Flamme bei sehr homogener Temperaturverteilung zwischen 1200 und 1300'C verbrannt.

Der Verbrennungseinrichtung 14 unmittelbar und axial nachgeschaltet ist ein Schadstoffkatalysator 18, der als einfacher Oxidationskatalysator ausgebildet sein kann. Durch den unmittelbaren Anschluß wird der Schadstoffkatalysator 18 nach dem Start außerordentlich schnell aufgeheizt, so daß nur geringe Startemissionen entstehen. Sofern es sich bei dem Kolbenmotor 1 um einen Dieselmotor handelt, tritt an die Stelle des Schadstoffkatalysators 18 ein Rußfilter, beispielsweise auf Keramikbasis. Durch die unmittelbar vorgeschaltete Verbrennungseinrichtung 14 kann der Rußfilter stark aufgehetzt werden, so daß die Rußpartikel verbrennen und damit der Rußfilter abgereinigt wird.

Wiederum koaxial anschließend ist ein Dampfmotor 19 angeordnet, der hintereinander eine erste Expansionsstufe 20 und eine zweite Expansionsstufe 21 aufweist. Von ihnen geht eine koaxiale Antriebswelle 22 aus, die außerhalb des Abgasrohres 12 einen Generator 23 zur Erzeugung von elektrischem Stroms zur direkten Versorgung von Stromverbrauchern oder für eine Kraftfahrzeugbatterie antreibt. Statt dessen können auch Hilfsaggregate wie der Kompressor einer Klimaanlage direkt angetrieben werden

Die zweite Expansionsstufe 21 ist von einem ersten Dampferzeuger 24 umgeben, der einen hier nicht näher dargestellten, ringförmigen Wärmetauscher aufweist, der von dem in der Verbrennungseinrichtung 14 erzeugten Heizgas durchströmt wird. Der erste Dampferzeuger 24 wird von Speisewasser durchströmt, das von einer hier nicht näher dargestellten Speisewasservorwärmung kommt. Danach gelangt es in einen zweiten Dampferzeuger 25, der die erste Expansionsstufe 20 umgibt und ebenfalls von dem in der Verbrennungseinrichtung 14 erzeugten Heizgas durchströmt wird. Der so erzeugte Dampf wird dann in der ersten Expansionsstufe 20 auf einen mittleren Druck entspannt. Nach dieser ersten Expansion wird der Dampf in einem Zwischenüberhitzer 26 nochmals auf eine höhere Temperatur gebracht und in der nachfolgenden, zweiten Expansionsstufe 21 auf einen niedrigen Druck entspannt. Im Anschluß daran wird der Dampf in einem hier nicht näher dargestellten geschlossenen System einem Kondensator zugeführt. In dem Kondensator wird der Dampf vollständig zu Speisewasser kondensiert Das Speisewasser wird dann in ein ein Reservoir zurückgeführt. Die technisch nutzbare Leistung wird in den beiden Expansionsstufen 20, 21 realisiert. Dabei wird durch die Zwischenüberhitzung ein hoher Wirkungsgrad erreicht.

Solche geschlossenen Systeme sind an sich bekannt (DE-Z "MTZ Motortechnische Zeitschrift", 61 (2000) 314-323) und daher hier nicht im einzelnen beschrieben. Auch der Zwischenüberhitzer 26 wird axial von dem Heizgas durchströmt. Der Zwischenüberhitzer umgibt die beiden Expansionsstufen 20, 21 mantelartig. Im Anschluß daran gelangt das Heizgas wieder in das Hauptabgasrohr 12, das sich verjüngt fortsetzt.

Sofern der Kolbenmotor 1 als Dieselmotor ausgebildet ist, reicht in der Regel der im Abgas vorhandene Luftüberschuß aus, um eine Verbrennung in der Verbrennungseinrichtung 14 aufrecht zu erhalten. Bei Ottomotoren ist der Luftüberschuß -so überhaupt noch einer vorhanden ist- hierfür zu gering. Für diesen Fall ist eine Luftzufuhreinrichtung 27 vorgesehen, die aus einem eingangsseitigen Luftfilter 28 und einem elektrisch angetriebenen Gebläse 29 besteht. Die Luftzufuhreinrichtung 27 hat Verbindung zu dem Hauptabgasrohr 12 über ein in das Hauptabgasrohr mündendes Luftzuführrohr 30. Dadurch strömt in die Mischkammer 15 ein luftangereichertes Abgas ein. Um eine vollständige Verbrennung zu erzielen, ist vor der Einmündung des Luftzuführrohres in das Hauptabgasrohr 30 ein auf Sauerstoff ansprechender Sensor, z.B. eine Lamda-Sonde 31 vorgesehen, die den Sauerstoffgehalt im Abgas mißt. In Abhängigkeit von diesem Sauerstoffgehalt wird die Luftzufuhr über das Gebläse 29 gesteuert.

## Patentansprüche

1. Vorrichtung zur Erzeugung mechanischer Energie enthaltend eine Verbrennungs-Kraftmaschine und eine Expansions-Kraflmaschine (20,21), die mit Heißdampf von einem Dampferzeuger (24) gespeist ist, wobei Abgase der Verbrennungs-Kraftmaschine zur Nutzung der Abwärme auf den Dampferzeuger (24) aufgeschaltet sind, **dadurch gekennzeichnet, daß** der Dampferzeuger (24) von einem nicht-katalytischen Brenner (16) mit einer Brennertemperatur zwischen 1100° bis 1340°C beheizt ist und die Abgase der Verbrennungs-Kraftmaschine auf den Brenners (16) geleitet sind, wobei dem Brenner (16) eine Mischkammer (15) vorgeschaltet ist, in welche die heißen Abgase der Verbrennungs-Kraftmaschine geleitet werden, und Mittel zum einspritzen von Treibstoff in die heißen Abgase zur Erzeugung eines Brenngases für den Brenner (16).

2. Vorrichtung nach Anspruch 1, **dadurch gekennzeichnet, daß** der nicht-katalytische Brenner (16) ein Porenbrenner ist.

3. Vorrichtung nach Anspruch 1 oder 2, **dadurch gekennzeichnet, daß** der nicht-katalytische Brenner (16) und die Verbrennungs-Kraftmaschine mit der gleichen Art von Treibstoff betreibbar sind.

4. Vorrichtung nach einem der Ansprüche 1 bis 3, **dadurch gekennzeichnet, daß** der Brenner (16) mit Luftzufuhrmitteln verbunden ist.

5. Vorrichtung nach Anspruch 4, **dadurch gekennzeichnet, daß** die Luftzufuhrmittel über ein Luftzufuhrrohr (30) Verbrennungsluft in eine Abgasleitung (12) stromauf von deren Mündung in die Mischkammer (15) einleiten.

6. Vorrichtung nach Anspruch 5, **dadurch gekennzeichnet, daß**
(a) die Luftzufuhrmittel ein Gebläse (29) aufweisen und
(b) stromauf von der Einmündung des Luftzufuhrrohres (30) in die Abgasleitung (12) ein Sensor (31) zur Messung des Sauerstoffgehalts im Abgas angeordnet ist und
(c) das Gebläse (29) in Abhängigkeit von diesem Sauerstoffgehalt steuerbar ist.

7. Vorrichtung nach einem der Ansprüche 1 bis 6, **dadurch gekennzeichnet, daß** dem Brenner (16) ein Schadstoffkatalysator (18) nachgeschaltet ist.

8. Vorrichtung nach einem der Ansprüche 1 bis 7, **dadurch gekennzeichnet, daß** dem Brenner (16) ein Rußfilter nachgeschaltet ist.

9. Vorrichtung nach Anspruch 8, **dadurch gekennzeichnet, daß** der Schadstoffkatalysator bzw. das Rußfilter stromauf von dem Dampferzeuger (24) angeordnet sind.

## Claims

1. Device for the generation of mechanical energy comprising an internal combustion engine and an expansion engine (20, 21) which is fed with superheated steam from a steam generator (24), wherein the exhaust gases of the internal combustion engine are injected into the steam generator (24) to use the waste heat thereof, **characterised in that** the steam generator (24) is heated by a non-catalytic burner (16) to a burner temperature between 1100° to 1300° and the exhaust gases from the combustion engine are injected into the combustion gases of the burner (16), wherein the burner (16) is arranged upstream to a mixing chamber (15), wherein the hot exhaust gases of the combustion engine are injected, and means are provided for injecting fuel into the hot exhaust gases for the generation of a burning gas for the burner (16).

2. Device according to claim 2, **characterised in that** the non-catalytic burner (16) and the combustion engine are operated with the same kind of fuel.

3. Device according to claim 1 or 2, **characterised in that** the non-catalytic burner (16) and the combustion engine are operated with the same kind of fuel.

4. Device according to any of claims 1 to 3, **characterised in that** the burner (16) is provided with air supplying means.

5. Device according to claim 4, **characterised in that** the air supplying means introduce burning air into an exhaust pipe (12) upstream from its orifice into the mixing chamber (15) through an air supply pipe (30).

6. Device according to claim 5, **characterised in that**
(a) the air supplying means are provided with a fan (29), and
(b) upstream from the junction of the air supplying pipe (30) and the exhaust pipe (12) a sensor (31) is arranged for the determination of the oxigen content of the exhaust gas and
(c) the fan (29) controlled depending on said oxigen content.

7. Device according to any of claims 1 to 6, **characterised in that** downstream from the burner (16) a catalytic converter for pollutants is provided.

8. Device according to any of claims 1 to 7, **characterised in that** downstream from the burner (16) a carbon-particulate filter is provided.

9. Device according to claim 8, **characterised in that** the catalytic converter for pollutants or the carbon-particulate filter, respectively, is arranged upstream from the steam generator (24).

## Revendications

1. Dispositif destiné à produire de l'énergie mécanique comprenant un moteur à combustion interne et un moteur à détente (20,21) qui est alimenté par la vapeur surchauffée d'un générateur de vapeur (24), les gaz d'échappement du moteur à combustion interne étant appliqués au générateur de vapeur (24) pour que celui-ci utilise leur chaleur perdue, **caractérisé en ce que** le générateur de vapeur (24) est chauffé par un brûleur (16) non catalytique à une température de brûleur comprise entre 1100° et 1300°C et les gaz d'échappement du moteur à combustion interne sont guidés sur le brûleur (16), une chambre de mélange (15) à l'intérieur de laquelle sont guidés les gaz d'échappement chauds du moteur à combustion interne étant placée avant le brûleur (16), et par des moyens destinés à injecter du carburant dans les gaz d'échappement chauds afin de produire un gaz combustible pour le brûleur (16).

2. Dispositif selon la revendication 1, **caractérisé en ce que** le brûleur non catalytique (16) est un brûleur poreux.

3. Dispositif selon la revendication 1 ou 2, **caractérisé en ce que** le brûleur non catalytique (16) et le moteur à combustion interne peuvent être actionnés avec la même nature de carburant.

4. Dispositif selon l'une quelconque des revendications 1 à 3, **caractérisé en ce que** le brûleur (16) est relié à des moyens d'alimentation en air.

5. Dispositif selon la revendication 4, **caractérisé en ce que** les moyens d'alimentation en air introduisent de l'air de combustion par l'intermédiaire d'un tuyau d'alimentation en air (30) à l'intérieur d'une conduite de gaz d'échappement (12) en amont de leur admission à l'intérieur de la chambre de mélange (15).

6. Dispositif selon la revendication 5, **caractérisé en ce que**
(a) les moyens d'alimentation en air présentent une soufflante (29) et
(b) un capteur (31) destiné à mesurer la teneur en oxygène dans les gaz d'échappement est disposé en amont de l'admission du tuyau d'alimentation en air (30) à l'intérieur de la conduite de gaz d'échappement (12) et
(c) la soufflante (29) peut être commandée en fonction de cette teneur en oxygène.

7. Dispositif selon l'une quelconque des revendications 1 à 6, **caractérisé en ce qu'**un catalyseur anti-pollution (18) est placé après le brûleur (16).

8. Dispositif selon l'une quelconque des revendications 1 à 7, **caractérisé en ce qu'**un filtre à particules est placé après le brûleur (16).

9. Dispositif selon la revendication 8, **caractérisé en ce que** le catalyseur anti-pollution ou le filtre à particules est disposé en amont du générateur de vapeur (24).
